# EUROPÄISCHE PATENTANMELDUNG

(11) **EP 1 380 949 A2**
(43) Veröffentlichungstag der Anmeldung: **14.01.2004**
(21) Anmeldenummer: 03101854.2
(22) Anmeldetag: 24.06.2003
(51) Int. Cl.: G06F 11/07

(54) **Automatische Auswertung von Eigenschaften eines Systems auf Basis von Ablaufprotokollen**

(30) Priorität: 09.07.2002 DE 10230883
(71) Anmelder: SIEMENS AKTIENGESELLSCHAFT, 80333 München (DE)
(72) Erfinder: Ulrich, Andreas, 81739, München (DE); Pietschker, Andrej, 81739, München (DE)

(57) **Zusammenfassung**

Zur Analyse eines komplexen, nebenläufigen Systems wird ein Ablaufprotokoll in XML erzeugt und/oder nach Erzeugung in XML konvertiert. Dieses Ablaufprotokoll wird auf Eigenschaften des Systems hin untersucht. Interessante Eigenschaften werden mit XSLT-Mitteln beschrieben. Die XSLT-Mittel dienen damit der Filterung und Visualisierung der Analyseergebnisse.

## Beschreibung

Beim Testen von komplexen Systemen, die vielfach nebenläufig und verteilt sind, werden Ablaufprotokolle in Form von Traces oder Logs erzeugt. Diese enthalten Informationen zum Systemverhalten während dem Betrieb des Systems, sei es in Testläufen oder in tatsächlichen Anwendungen. Die gesammelten Informationen werden bei der Fehleranalyse verwendet, um das Systemverhalten zu reproduzieren. Heutige komplexe Systeme liefern in diesen Ablaufprotokollen große Mengen an Informationen, die manuell nur noch schwer auszuwerten sind. Auch komplexe Zusammenhänge im System lassen sich manuell nur schwer ermitteln.

Die Auswertung der Ablaufprotokolle erfolgt trotzdem in aller Regel manuell. Zum Teil werden aber auch Speziallösungen erstellt, die, angepasst an die Systemumgebung und das zu untersuchende Fehlerbild, Auswertungen vornehmen. Diese Lösungen erfordern einen großen Aufwand in der Realisierung und Pflege. In der Literatur finden sich auch allgemeine Ansätze, die eine automatische Auswertung von Ablaufprotokollen offenbaren. So ist aus Hallal H. et al.: "Using SDL-Tools to Test Properties of Distributed Systems", in: Brinksma E. und Tretmans J. (Editoren): "Formal Approaches to Testing of Software - FATES '01", Seiten 125-140, Aalborg, Dänemark, August 2001 ein Verfahren bekannt, bei dem Ablaufprotokolle zur automatischen Auswertung in SDL (Specification and Description Language) erzeugt werden. Für diesen Ansatz werden aber komplexe und teuere Werkzeuge benötigt, die daher kaum in der Breite eingesetzt werden können.

Der Erfindung liegt die technische Aufgabe zugrunde, die Analyse von komplexen technischen Systemen zu erleichtern und zu automatisieren. Dabei sollen die geschilderten Nachteile des Standes der Technik vermieden werden.

Diese Aufgabe wird durch die in den unabhängigen Ansprüchen angegebenen Erfindungen gelöst. Vorteilhafte Ausgestaltungen ergeben sich in den Unteransprüchen.

Bei einem Verfahren zur Analyse der Funktionsfähigkeit eines technischen Systems wird zur Fehleranalyse mittels eines oder mehrerer Rechner ein Ablaufprotokoll in Form eines Traces oder Logs erzeugt. Das Ablaufprotokoll enthält Informationen über das Systemverhalten während des Betriebes des Systems in Form von Informationen über mindestens ein im Betrieb des Systems auftretendes Ereignis, insbesondere eine Vielzahl von Ereignissen. Das Ablaufprotokoll wird in XML (Extensible Markup Language) erzeugt und/oder nach Erzeugung in XML konvertiert.

Gemäß dem Stand der Technik setzt man für die automatische Auswertung eine Modellierungssprache, z.B. SDL, ein, um ein komplexes System zu verifizieren. Mit dieser Modellierungssprache wird das System modelliert, indem es durch ein Ablaufprotokoll nachgebildet wird.

Die Erfindung geht durch die Verwendung von XML von einem ganz anderen Ansatz aus. XML ist nämlich gerade keine Modellierungssprache und nicht dafür geschaffen, Abläufe darzustellen. Vielmehr ist XML normalerweise eine Strukturierungssprache, mit der sich Datenmengen strukturiert darstellen lassen. Der Erfindung liegt also die Idee zugrunde, die Ablaufprotokolle weder als reinen manuell zu bearbeitenden Text zu erzeugen, noch gleich mit der Erzeugung der Ablaufprotokolle ein formales Modell zu generieren, sondern vielmehr eine strukturierte Ausgabe in XML zu erzeugen, die einer nachträglichen automatisierten Bearbeitung zugeführt werden kann. Die Erfindung liegt somit praktisch zwischen den aus dem Stand der Technik bekannten Vorgehensweisen.

Damit ergibt sich gegenüber den manuellen Vorgehensweisen der Vorteil der Automatisierung. Gegenüber dem Modell basierten Ansatz ergeben sich die Vorteile geringerer Komplexität der erzeugten Ablaufprotokolle sowie deutlich reduzierter Kosten für deren Weiterverarbeitung.

Das Ablaufprotokoll wird dazu gleich in einem standardisierten Format erzeugt oder nach seiner Erzeugung in dieses konvertiert. Die Beschreibung des standardisierten Formates für das Ablaufprotokoll erfolgt in einem XML-Schema.

Es ist vorteilhaft, für die Ablaufprotokolle ein bestimmtes XML-Format vorzusehen, das besondere Angaben enthält.

Das Ablaufprotokoll enthält insbesondere den Namen und die Art des Ereignisses.

Zu den Angaben kann auch gehören, ob das Ereignis ein lokales Ereignis, ein Registrierungsereignis oder ein Kommunikationsereignis ist. Lokale Ereignisse sind Ereignisse, die lokal in einem Systemteil auftreten. Mit einem Systemteil ist insbesondere eine nebenläufige Ausführungsprozedur (Thread) einer Anwendung, ein Gerät(Device als virtuelles oder reelles Hardwareteil), ein Prozess und/oder ein Objekt gemeint. Lokale Ereignisse sind beispielsweise Ereignisse wie Variablenbelegungen und Überprüfungen von Behauptungen.

Geräte, Prozesse, Ausführungsprozeduren und Objekte können sich während dem Betrieb des Systems registrieren und aus der Registrierung entfernen. Diese Ereignisse sind Registrierungsereignisse. Sie definieren die Lebensdauer ihrer Quelle und erlauben es, andere Ereignisse an Hardware oder Softwareprozesse anzupassen.

Das Senden und der Empfang von Nachrichten sind Kommunikationsereignisse. Zu dieser Gruppe von Ereignissen gehören auch ferngesteuerte Verfahrensanfragen.

Vorteilhaft ist es auch, wenn das Ablaufprotokoll eine Angabe zu Parametern des das Ereignis auslösenden bzw. zum Ereignis gehörenden Systemteils enthält, insbesondere eine Angabe, durch die das Systemteil identifizierbar ist.

Beim Systemteil kann es sich insbesondere um ein eine Nachricht empfangendes und/oder ein ein Nachricht sendendes Systemteil handeln.

In diesem Fall kann das Ablaufprotokoll eine Angabe zu Parametern der Nachricht enthalten, insbesondere zur Identifizierung der Nachricht.

Mit besonderem Vorteil wird das Ablaufprotokoll durch computergestütztes Parsen auf eine korrekte XML-Syntax überprüft. Dadurch ist die automatische Überprüfung des Ablaufprotokolls auf seine syntaktische und teilweise semantische Korrektheit möglich. Hierzu lassen sich kostengünstig Standard-XML-Parser einsetzen.

In einer ganz besonders bevorzugten Ausführungsform der Erfindung wird das Ablaufprotokoll durch XSLT (Extensible Style-Sheet Language Transformation)-Mittel weiterverarbeitet. Durch die Verwendung von XSLT-Mitteln ergeben sich folgende Vorteile:
- XSLT-Mittel lassen sich leicht portieren;
- gesuchte Eigenschaften lassen sich einfach ausdrücken;
- XSLT-Mittel lassen sich wiederverwerten, beispielsweise für die Suche nach anderen Eigenschaften;
- XSLT-Mittel sind flexibel und damit für die unterschiedlichsten Analyseaufgaben einsetzbar.

Diese Vorteile ergeben sich daraus, dass XSLT eine an XML angepasste funktionale Programmiersprache ist.

Zur Weiterverarbeitung des Ablaufprotokolls durch XSLT-Mittel wird die zu untersuchende Eigenschaft des Systems in XSLT-Notation ausgedrückt. Daraus werden dann automatisch Analyseund Visualisierungsbausteine als XSLT-Mittel generiert. Jeder Baustein stellt ein unabhängiges ausführbares Programm dar. Ein Analysebaustein verarbeitet ein Ablaufprotokoll in XML-Notation und erzeugt während der Analyse der in ihm codierten Eigenschaft ein modifiziertes Ablaufprotokoll, das von weiteren XSLT-Mitteln bearbeitet werden kann.

Ein XSLT-Mittel kann insbesondere eine Filterfunktion beinhalten, über die die Eigenschaft oder andere Eigenschaften gefiltert werden können.

Zum Schluss der Analyse wird das Ablaufprotokoll in eine geeignete visuelle Darstellung überführt. Dazu dienen XSLT-Mittel zur Visualisierung, beispielsweise für die Darstellung in SVG (Scalable Vector Graphics), HTML (Hypertext Markup Language) oder encapsulated Postscript.

Eine Anordnung, die eingerichtet ist, eines der beschriebenen Verfahren auszuführen, lässt sich durch das Vorsehen von Mitteln realisieren, durch die die Verfahrensschritte ausführbar sind. Bevorzugte Ausgestaltungen einer solchen Anordnung ergeben sich analog zu den bevorzugten Ausgestaltungen des Verfahrens.

Ein Programmprodukt für eine Datenverarbeitungsanlage, das Softwarecodeabschnitte enthält, mit denen eines der geschilderten Verfahren auf der Datenverarbeitungsanlage ausgeführt werden kann, lässt sich durch geeignete Implementierung des Verfahrens in einer Programmiersprache und Übersetzung in von der Datenverarbeitungsanlage ausführbaren Code realisieren. Die Softwarecodeabschnitte werden dazu gespeichert. Dabei wird unter einem Programmprodukt das Produkt als handelbares Produkt verstanden. Es kann in beliebiger Form vorliegen, so zum Beispiel auf Papier, einem computerlesbaren Datenträger oder über ein Netz verteilt.

Weitere wesentliche Vorteile und Merkmale der Erfindung ergeben sich aus der Beschreibung eines Ausführungsbeispiels anhand der Zeichnung. Dabei zeigt:
- Figur 1: eine Verwendung von XML bei der Analyse von Ablaufprotokollen;
- Figur 2: eine Strukturierungsvorschrift von Ereignissen in XML;
- Figur 3: eine Konvertierung eines Ablaufprotokolls unter Verwendung von XSLT-Mitteln;
- Figur 4: eine Ausführungsprozeduransicht eines einfachen Ablaufprotokolls;
- Figur 5: eine Aufeinanderfolge von Filtern;
- Figur 6: eine Verwendung von Ablaufprotokoll-Analysewerkzeugen;
- Figur 7: eine Performance-Analyse und
- Figur 8: eine graphische Darstellung einer Analyse.

### Überblick über ein Analyseverfahren mit Ablaufprotokollen

Zur Analyse von Ablaufprotokollen von Systemen wird die Verwendung von XML-Standardtechnologien vorgeschlagen. Dadurch wird der Entwicklungsaufwand für spezielle Tools minimiert.

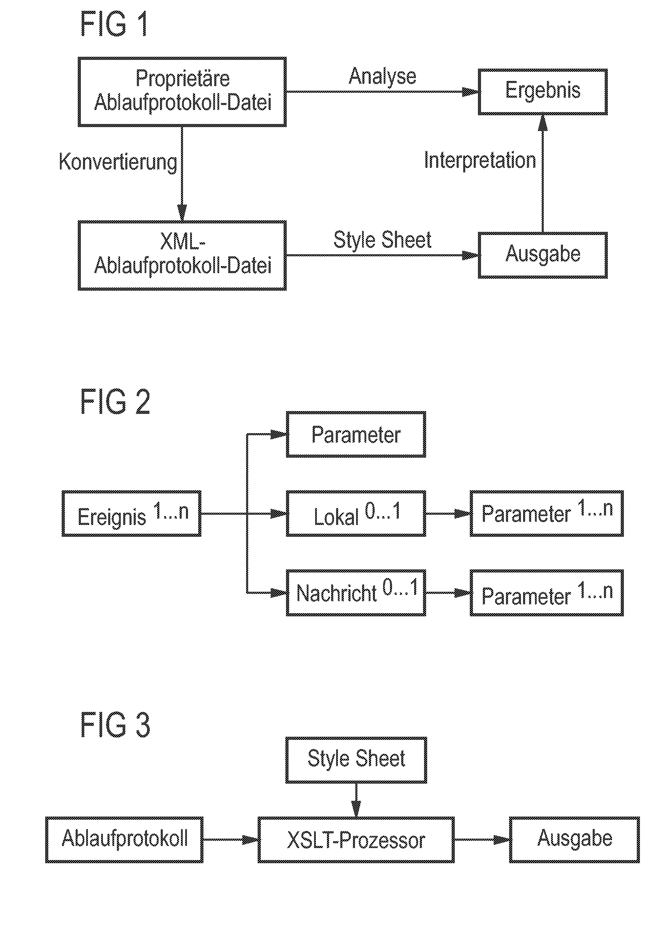

Das Diagramm in Figur 1 illustriert diese Idee. Statt sich auf die semantische Analyse von Ablaufprotokollen zu konzentrieren wird ein syntaktischer Transformationsschritt angewandt, um ein entsprechendes Ereignis automatisch zu erhalten. Dabei ist es jedoch wichtig festzustellen, dass die Analyse auf solche Eigenschaften beschränkt ist, die syntaktisch beschrieben werden können.

Die Grundlage des Ansatzes sind Ablaufprotokolle in XML-Notation. Zusammen mit der Transformationstechnologie XSLT können damit Ablaufprotokolle basierend auf syntaktischen Regeln analysiert werden. Aus Informationen, die in weiterführenden Transformationen extrahiert werden, und einer visuellen Untersuchung des Ergebnisses kann man auf die Eigenschaften des Systems schließen.

In diesem Ablaufprotokoll-Analyseverfahren
- wird ein Ablaufprotokoll des Systems beobachtet, das eine Liste von partiell geordneten Ereignissen für die Registrierung von Ausführungsprozeduren und Objekten, Kommunikationen und lokalen Ereignissen enthält;
- wird ein Ablaufprotokoll offline in ein XML-basiertes Ablaufprotokoll konvertiert,
- wird unter Verwendung von XML-Style-Sheets (XSL) eine Beschreibung von interessierenden Eigenschaften erzeugt,
- werden die Style-Sheets auf XML-Ausgabeprotokolle unter Verwendung von XSLT-Mitteln angewandt.

Das Ablaufprotokoll-Analyseverfahren bietet sowohl einen Überblick als auch Zoom- und Filterfunktionen sowie auf Anfrage spezielle Details zu gewünschten Ereignissen des Ablaufprotokolls.

Durch eine Visualisierung werden Ablaufprotokollinformationen einem Nutzer zugänglich gemacht. Hierzu wird vorzugsweise das SVG-Format verwendet. SVG ist ein XML-basiertes Format zur graphischen Darstellung. Es gibt eine Vielzahl von Tools für die Visualisierung von SVG-Inhalten. Dadurch kann auf das Erstellen einer spezialisierten Ausgabeeinheit verzichtet werden.

Ablaufprotokolle von komplexen Systemen sind oft ausgesprochen groß und werden dadurch unhandlich. Im Verfahren werden Filteroperationen benutzt, um im Ablaufprotokoll enthaltene Informationen und damit die Größe des Ablaufprotokolls zu reduzieren. Diese Operationen müssen genau und konsistent sein.

Nicht alle Informationen sollten in der Darstellung des Ablaufprotokolls ständig präsent sein, sonst würde eine Anzeige überladen und das Auffinden relevanter Informationen erheblich erschwert. Allerdings sollte es möglich sein, beim Untersuchen von Ereignissen, weitergehende Informationen in einfacher Weise dem Benutzer zugänglich zu machen.

### Aufbau und Inhalt des Ablaufprotokolls

Im Betrieb eines Systems werden Ereignisse gesammelt. Dabei werden die folgenden Klassen von Ereignissen unterschieden:
- Registrierungsereignisse
- Kommunikationsereignisse
- Lokale Ereignisse

Da ein Ablaufprotokoll als Input des Verfahrens zur Analyse eines Systems dient, müssen im System Mittel gegeben sein, um Ereignisse für das Ablaufprotokoll an bestimmten Punkten zu generieren. Es gibt unterschiedliche Methoden, solche Mittel in ein System einzufügen. Die vielversprechendsten von ihnen sind diejenigen, die automatisch arbeiten. Dazu gehören beispielsweise Methoden auf Basis von Microsoft COM, Java RMI oder CORBA.

Um in der Ablaufprotokollanalyse genutzt werden zu können, sollte jedes Ablaufprotokollereignis, das ein Kommunikationsereignis oder ein lokales Ereignis ist, vorteilhaft der folgenden Struktur folgen und die dementsprechenden Angaben aufweisen:
- Name und Typ des Ereignisses: Sendeereignis, Empfangsereignis oder lokales Ereignis;
- ID der auslösenden Ausführungsprozedur oder das auslösenden Objekts;
- ID der Quellausführungsprozedur und des Quellobjekts (für Empfangsereignisse);
- ID der Bestimmungsausführungsprozedur und des Bestimmungsobjekts (für Sendeereignisse);
- Parameter der Nachricht des Ereignisses: eine Liste von Parametern, die einen Namen für die Nachricht und andere Nachrichtenattribute enthält (für Kommunikationsereignisse);
- lokale Parameter der auslösenden Ausführungsprozedur oder des auslösenden Objekts: eine Liste von Parametern, die den augenblicklichen Status wiedergeben (für lokale Ereignisse).

Weiterhin treten Registrierungsereignisse auf, die neu erzeugte Ausführungsprozeduren, Prozesse oder Objekte in ein Ablaufprotokoll einführen. Es wird angenommen, dass die lokale Reihenfolge aller Ereignisse in ihrer Reihenfolge im Ablaufprotokoll gewahrt bleibt. Das Problem des Zuordnens von Empfangs- und Sendeereignissen ist wesentlich, um die Reihenfolge der Ereignisse zu bestimmen und schließlich die Analyse auf dem aufgenommenen Ablaufprotokoll aufzubauen. Viel hängt davon ab, wie das verteilte System eingerichtet ist und was tatsächlich angezeigt wird. Es wird angenommen, dass in einem Paar von Quell- und Zielprozess jedes Empfangsereignis zu einem einzelnen Sendeereignis gehört. Die partielle Reihenfolge (Halbordnung, partial order) über die Ereignisse in einem verteilten System lässt sich unter Verwendung der binären Happend-Before-Relation "→" beschreiben, die die theoretische Basis dieses Ansatzes ist. Sie ist wie folgt definiert:
- Wenn Ereignis *e* in Ausführungsprozedur t dem Ereignis *e'* in derselben Ausführungsprozedur t vorangeht, dann *e* → *e'.*
- Wenn Ereignis *e* ein Sendeereignis in Ausführungsprozedur *t* ist und Ereignis *e'* das korrespondierende Empfangsereignis in Ausführungsprozedur *t*', dann *e* → *e'.*
- Die Happend-Before-Relation ist transitiv.

Figur 2 illustriert das XML-Format eines Ereignisses. Ein Ereignis wird durch seinen Typ und seiner Operation beschrieben. So hat zum Beispiel ein Sendeereignis "Kommunikation" als Typ und "Senden" als Operation. Jedes Ereignis enthält ein Element "Parameter", das, wie oben erläutert, Informationen über den Ursprung des Ereignisses enthält. Zusätzlich kann ein Ereignis das Element "lokal" aufweisen, das Informationen über den Zustand lokaler Variablen aufweist. Kommunikationsereignisse enthalten ein Element "Nachricht" mit dem jeweiligen Inhalt der Nachricht.

Das Format ist als DTD (Document Type Description) spezifiziert, wodurch die Verwendung von XML-Parsern zur Überprüfung einer Ausgabeprotokolldatei auf syntaktische Korrektheit ermöglicht wird.

### Visualisierungskomponenten

Ablaufprotokolle werden in ihre graphische Repräsentation durch Style-Sheets unter Verwendung von XSLT-Mitteln in Form eines Style-Sheet-Prozessors oder eines XSLT-Prozessors konvertiert. Figur 3 illustriert diesen Teil des Verfahrens, für den eine größere Anzahl von Prozessoren bereits kostenlos verfügbar ist.

Mit einem SVG-Viewer-Plugin für Webbrowser kann man aus der graphischen Repräsentation heraus und in diese hineinzoomen.

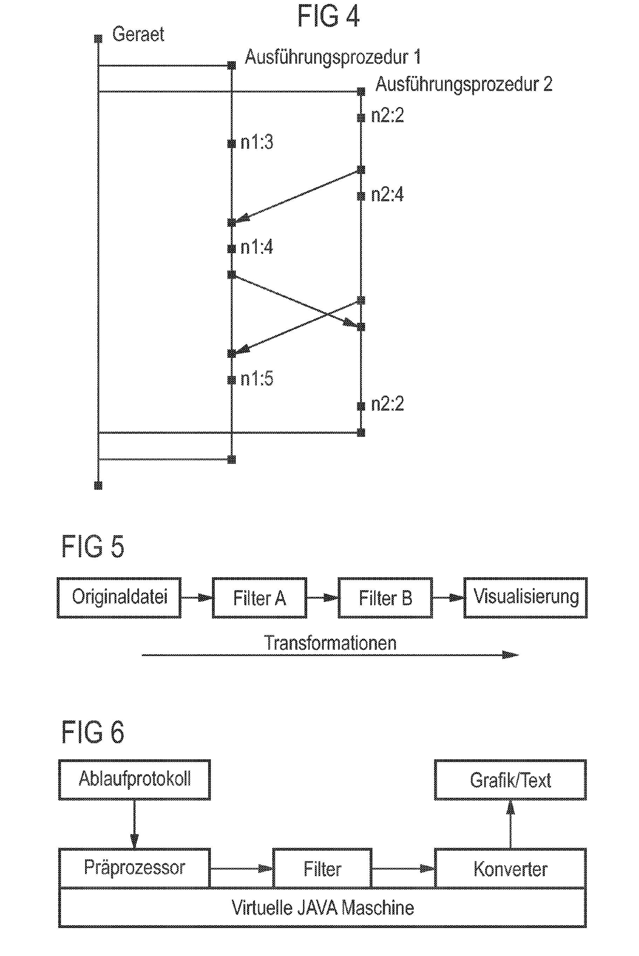

Auf diese Weise kann der Benutzer je nach Wunsch einen Überblick erhalten oder in die Grafik hineinzoomen, um detaillierte Informationen zu finden. Da es sich um ein vektorbasiertes Format handelt, ist die Qualität der Grafik in jeder Zoomstufe hochwertig. Es werden zwei unterschiedliche Ansichten eines Ablaufprotokolls zu Verfügung gestellt:
- Die Ausführungsprozeduransicht. Diese Ansicht ist einer Nachrichtenfolgeansicht ähnlich, wobei vertikale Linien die aktive Zeit eines Tasks repräsentieren. Kommunikationsereignisse zwischen Tasks werden durch Linien dargestellt, die die korrespondierenden Sende- und Empfangsereignisse verbinden (siehe Figur 4).
- Objektansicht. Auch diese Präsentation ist Nachrichtenfolgeansichten ähnlich, wobei vertikale Linien Objektlebensdauern repräsentieren.

Ereignisse in der Grafik werden farbig codiert. Die Verwendung von Farben macht es einfacher, Ereignisse zu identifizieren. Unterschiedliche Arten von Ereignissen können so einfach unterschieden werden. So lassen sich lokale Ereignisse beispielsweise gelb markieren. Die Farben sind in einem kaskadierenden Style-Sheet definiert, das in einer separaten Datei abgespeichert ist und nach persönlichen Vorlieben eingestellt werden kann.

Figur 4 zeigt ein einfaches Ablaufprotokoll in einer Ausführungsprozeduransicht, wobei alle Ereignisse in einem festen Abstand dargestellt sind. Dieser Darstellung wird vorzugsweise benutzt, wenn man nur an der Abfolge der Ereignisse interessiert ist. Man kann jedoch auch Zeitmarker im Ablaufprotokoll benutzen, um Zeitspannen zwischen Ereignissen als Abstand wiederzugeben. Solch eine Grafik kann sehr hilfreich sein, wenn Eigenschaften im Zeitbereich untersucht werden.

Die Anforderung, auf Nachfrage auch Details anzuzeigen, ist auf zwei Arten implementiert. Eine Art ist die Verwendung einer separaten HTML-Datei mit Verweisen von Einträgen der Grafik zur Textrepräsentation. Auf diese Weise enthält die Grafik die Information bezüglich der Interaktion der Objekte oder Ablaufprozeduren und die HTML-Datei stellt die Dateiansicht der Ereigniseinträge zur Verfügung. Eine Kombination dieser Ansichten kann durch die Verwendung von HTML-Frames verwendet werden.

In einer zweiten Implementierung werden die Fähigkeiten von SVG genutzt, Text zu animieren. Hier löst das Bewegen des Mauszeigers über ein bestimmtes Ereignis die Anzeige von Informationen wie Ereignisparametern oder Nachrichten aus. Wird der Mauszeiger wegbewegt, so werden die Informationen wieder ausgeblendet. Dieser Ansatz hat den Vorteil, das nur eine Datei verwendet werden muss, um alle Informationen anzuzeigen. Allerdings hat sich herausgestellt, dass bei großen Dateien die Geschwindigkeit beim Öffnen der jeweiligen Datei und Animieren zum Performance-Engpass wird.

### Filtern

Die Größe der Grafik und die Menge der Information, die sie repräsentiert, kann immer noch Probleme aufwerfen. Das Entfernen irrelevanter Informationen aus Ablaufprotokollen durch Filter kann deren Größe beträchtlich reduzieren und dafür sorgen, dass relevante Informationen bei der visuellen Untersuchung herausgestellt werden.

Dem Verfahren für die Visualisierung folgend werden Filter vorzugsweise als Style-Sheets implementiert und die Verarbeitung wird wiederum XSLT-Mitteln in Form eines XSLT-Prozessors überlassen.

Unter Verwendung von Sprachkonstruktionen aus XPath kann man Ereignismuster ausdrücken, die man entweder sucht oder im Ge genteil vorübergehend ignorieren will. Beispiele für solche Filter sind:
- Die Entfernung von lokalen Ereignissen
- Die Selektion von Kommunikationsereignissen zwischen Ablaufprozeduren
- Die Selektion von Kommunikationsereignissen zwischen Objekten

Lokale Ereignisse sind nicht von besonderem Interesse, wenn die Kommunikation zwischen Systemkomponenten im Fokus steht. Das Entfernen von lokalen Ereignissen kann durch die Verwendung des Style-Sheets nach Beispiel 1 erzielt werden.

### Beispiel 1

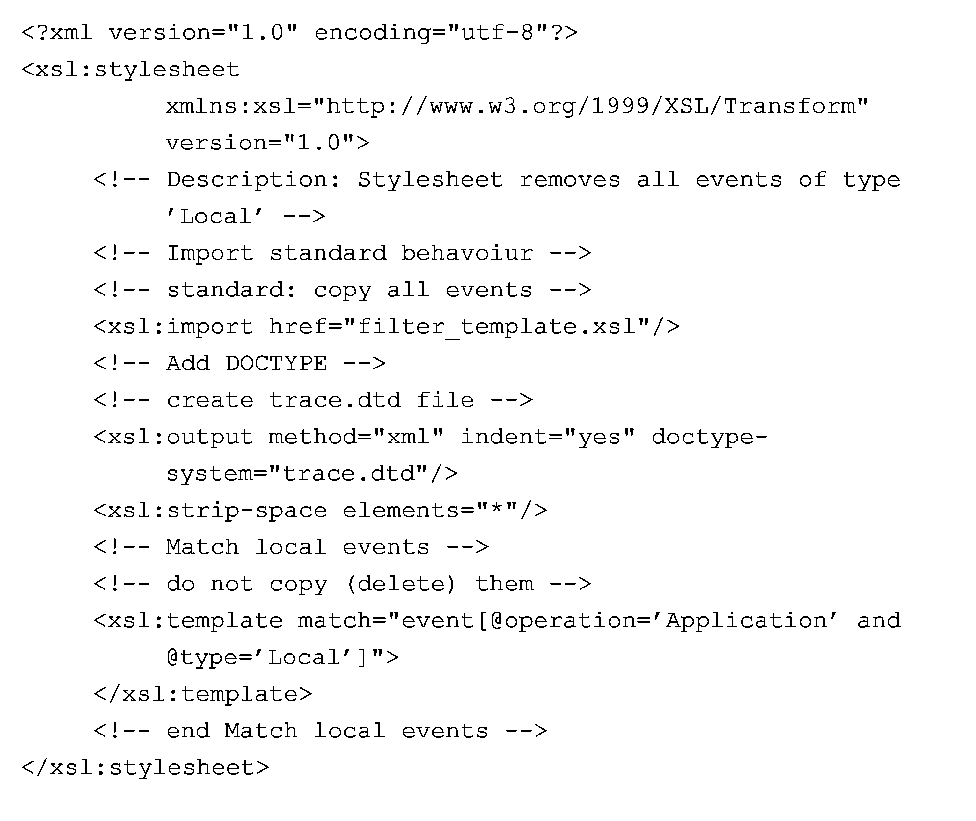

### Operationen mit Filtern

Das Ergebnis einer Filteroperation ist ein modifiziertes Ablaufprotokoll, das gültig ist und für die Visualisierung oder Analyse weiterverarbeitet werden kann. Deshalb ist es möglich, wie in Figur 5 dargestellt, eine Kombination von Filtern zu benutzen.

Diese Operation wird Verkettung genannt. Es ist jedoch darauf zu achten, dass die Verkettung von Filtern nicht kommutativ ist:
*filter1* o *filter2 ≠ filter2* o *filter1*

Style-Sheets wie in Beispiel 2, in dem in Zeile 8 ein generelles Style-Sheet importiert wird, das standardmäßig Kopien der Ereignisse in der resultierenden Datei erzeugt, können wiederverwendet werden.

### Beispiel 2

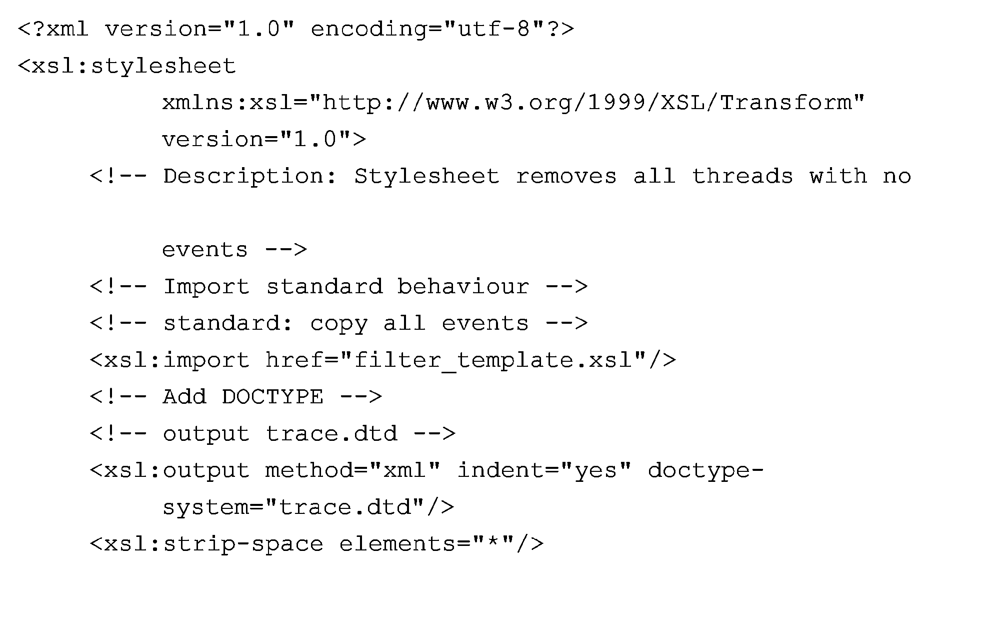

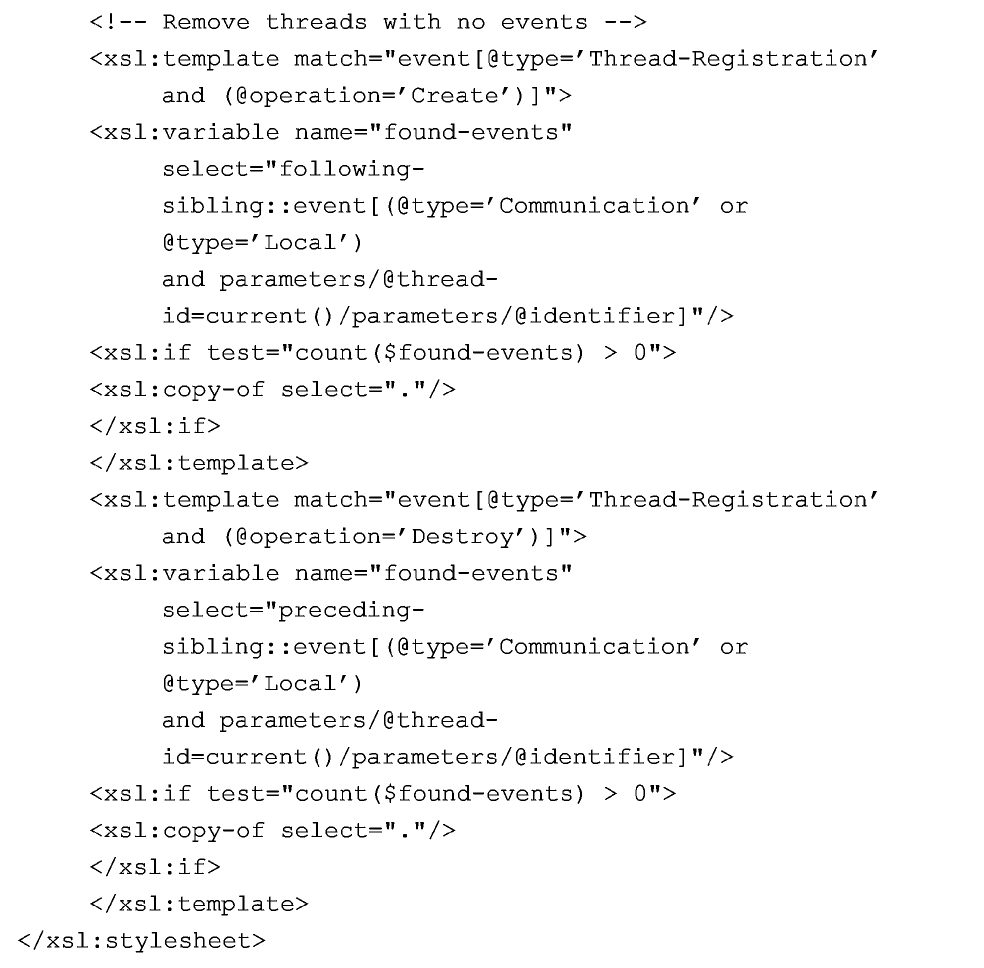

Man kann dann vom generellen Style-Sheet die Regeln überschreiben, um den speziellen Bedürfnissen im jeweiligen Anwendungsfall gerecht zu werden. Hier wird von Prioritätsregeln Gebrauch gemacht.

Statt des Imports von Style-Sheets kann man Style-Sheets auch miteinschließen, wie dies in Beispiel 3 in den Zeilen 6 bis 7 geschieht. Regeln von miteingeschlossenen Style-Sheets haben dieselbe Priorität wie Regeln des aktuellen Style-Sheets. Man kann diese Prioritätsregeln benutzen, um Regeln von importierten Style-Sheets zu überschreiben. Auf diese Weise lassen sich allgemeine Muster wiederverwenden und dadurch der Entwicklungsaufwand für Analysetools verringern.

### Beispiel 3

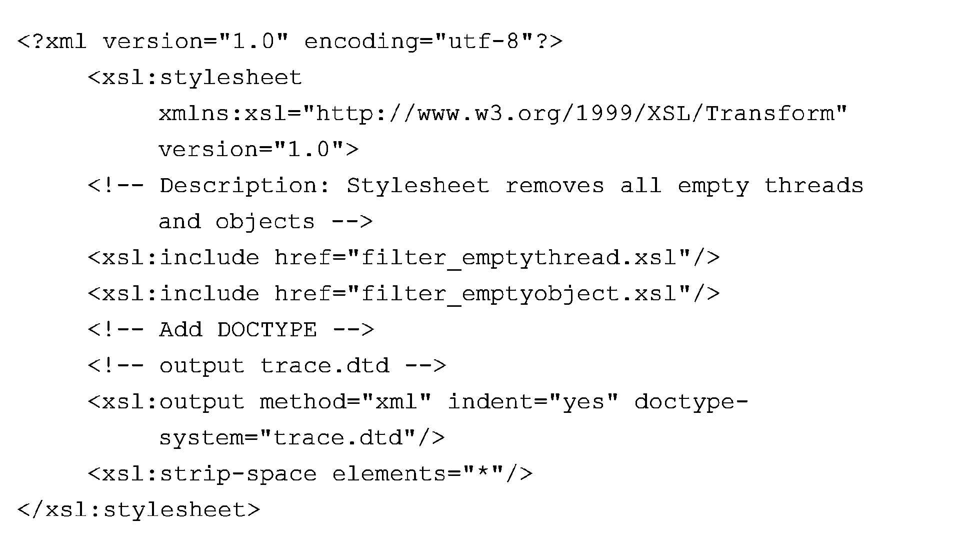

### Eigenschaftsanalyse

Die Idee der Verwendung von Style-Sheets für Filter lässt sich auf die Analyse von Eigenschaften in einem Ablaufprotokoll übertragen.
- Analyse von Datenüberholungen. Datenüberholungen können in einem verteilten System auftreten, wenn auf ein Objekt von mehr als einer Ausführungsprozedur aus zugegriffen wird. Dies ist eine Standardanalyse für verteilte Systeme.
- Totpunktanalyse. Ein Totpunkt kann in einem System auftreten, wenn eine Komponente aktiv auf ein Ereignis wartet, das niemals auftritt.

Üblicherweise werden diese Eigenschaften unter Verwendung von Modellen des Systems untersucht und erfordern eine formale Überprüfung. Dies kann ausgesprochen kostenintensiv sein und führt unter Umständen trotzdem nicht zu den gewünschten Ergebnissen.

Die hier vorgenommene Analyse basiert allein auf Ablaufprotokollen. Die Ergebnisse können allerdings nur mögliche Probleme identifizieren. Diese Probleme müssen dann weiterhin manuell untersucht werden. Nichtsdestotrotz ist dies deutlich einfacher, nachdem mögliche Problempunkte identifiziert sind. Zusätzlich können Performance-Engpässe basierend auf der Zeitspanne zwischen Ereignissen im Ablaufprotokoll untersucht werden.

Die Eigenschaften werden mit Hilfe von Bedingungen an Ereignisse im Ablaufprotokoll formuliert:

Bedingung für eine potentielle Datenüberholung: 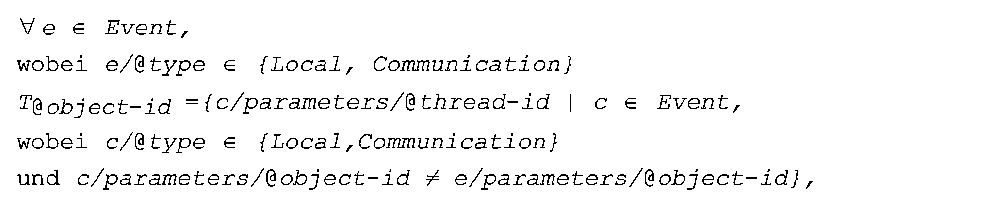 dann lässt sich eine potentielle Datenüberholung identifizieren als:
*race-condition =* | *T@object-id* | > 1.

Die Bedingung erweist sich als wahr, wenn mehr als eine Ablaufprozedur das mit *@object-id* identifizierte Objekt verwendet.

Bedingung für eine hochwahrscheinliche Datenüberholung:

Wenn die Bedingung für eine potentielle Datenüberholung erfüllt ist, kann die Analyse fortgeführt werden, um eine hochwahrscheinliche Datenüberholung zu identifizieren. Dazu muss überprüft werden, ob die identifizierten Ablaufprozeduren tatsächlich gleichzeitig sind, das heißt die Ereignisse dieser Ablaufprozeduren gleichzeitig sind.
∀*e, e'* ∈ *Event,*
wobei *e*/*@thread-id ≠ e'*/*@thread-id* und
*e*/*@object-id = e'*/*@object-id,*
dann gilt *e* → *e'* und *e'* → *e,* wenn die Ereignisse *e* und *e'* nicht gleichzeitig sind.

### Möglicher Totpunkt:

∀ *e* ∈ *Event,*
wobei *e*/*@type = Communication, e*/*@operation = Send* und
*e*/*parameters*/*@thread-id = t,*
identifiziert man eine möglicherweise blockierten Ablaufprozedur durch:
*deadlock-condition = e* ist das letzte Ereignis in *t*.

Diese generellen Muster können in jedem gleichzeitig ablaufenden oder verteilten System benutzt werden. Jedoch gibt es auch viele anwendungsspezifische Eigenschaften, die durch solche Muster beschrieben werden können. Diese Muster können aus den Systemanforderungen abgeleitet werden, um das korrekte Verhalten des zu testenden Systems zu überprüfen. Darüber hinaus können Muster auch Fehler beschreiben, die in vorhergehenden Tests auftauchen. In folgenden Tests können diese Muster benutzt werden, um zu überprüfen, ob ein solcher Fehler wieder aufgetaucht ist. Die anwendungsspezifischen Eigenschaften stellen in der Praxis üblicherweise den größten Teil der Ablaufprotokollanalyse dar. Das vorgestellte Verfahren vereinfacht die Beschreibung dieser Eigenschaften als Muster und steigert damit die Produktivität in der Testphase beträchtlich.

### Einsatz von Ablaufprotokoll-Analysewerkzeugen

Style-Sheets und zugehörige Prozessoren sind Ingenieuren ohne weiteres zugänglich, soweit sich diese mit der XSLT-Technologie auskennen. Darüber hinaus können sie aber auch einem größeren Kreis durch eine Technologie verfügbar gemacht werden, die sich übersetzte Style-Sheets nennt. Sie kann für die Installation der Analysewerkzeuge eingesetzt werden, statt Style-Sheets an den Benutzer auszuliefern. Ein Compiler erzeugt in diesem Fall z.B. ein Java-Programm aus einem gegebenen Style-Sheet. Dadurch hat man die Möglichkeit, gesuchte Eigenschaften weiterhin in XSLT auszudrücken, und ist trotzdem in der Lage, einfach Java-Programme für die Entwickler zu installieren, die implementierte Filter, Prozessoren und Konverter enthalten. Ein Beispiel für eine solche Java-Implementierung ist in Figur 6 dargestellt.

### Beispiel

Ein Beispiel für das Verfahren ist für ein eingebettetes Software-System realisiert, das auf Windows CE läuft.

Die Ablaufprotokolle werden in einem proprietären Format erzeugt und dann offline in das XML-basierte Ablaufprotokollformat konvertiert.

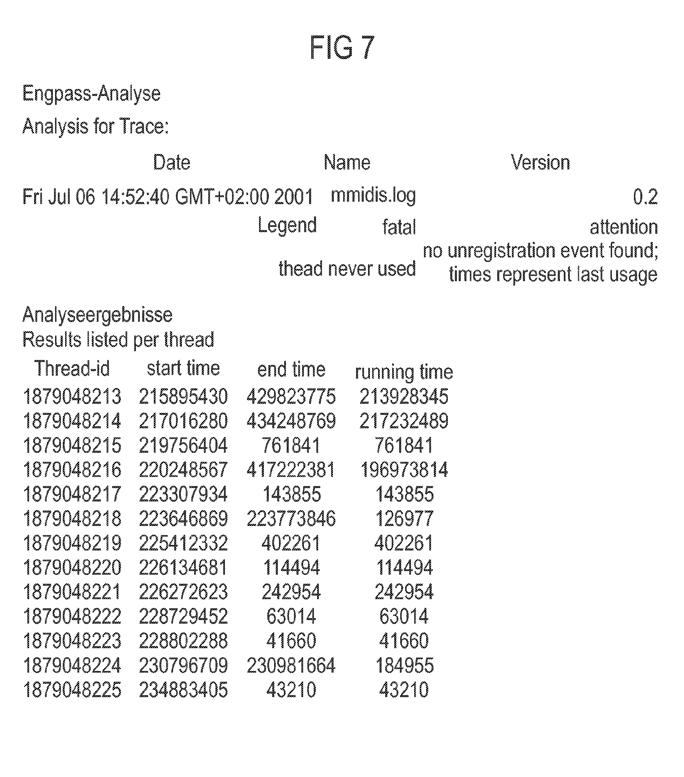

Von besonderem Interesse ist in diesem Beispiel der Grund, warum die Anwendung beträchtlich verlangsamt wird. Die Ablaufprotokolle selbst sind ausgesprochen groß und enthalten Millionen von Ereignissen. Die Herausforderung besteht darin, Aufrufe herauszufinden, die die Verlangsamung hervorrufen können. Zuerst wird die Performance der Aufrufe analysiert. Dazu wird ein Style-Sheet verwendet, das Paare von Aufrufund Rückgabeereignissen findet und den Zeitunterschied be rechnet. Das Ergebnis wird als HTML-Datei präsentiert (Figur 7).

Nach der Identifizierung von Performance-Engpässen sucht man nach dem Grund dieser Verzögerungen. Dazu werden im gegebenen Beispiel Fehlerereignisse näher untersucht. Die Fehlerereignisse sind in diesem Fall entweder lokale Ereignisse, die das Wort "Error" in der Nachricht enthalten, oder Kommunikationsereignisse, die ein spezifisches Rückgabeergebnis enthalten. Wiederum wird ein Style-Sheet implementiert, um nur diese Ereignisse auszufiltern und zu Visualisieren.

Durch das Farbkodierungsschema, die reduzierte Anzahl von Informationen und die Möglichkeit, einen schnellen Überblick über das Ablaufprotokoll zu erhalten, wird man nun schnell auf einen Implementierungsmangel als Grund der Verlangsamung geführt.

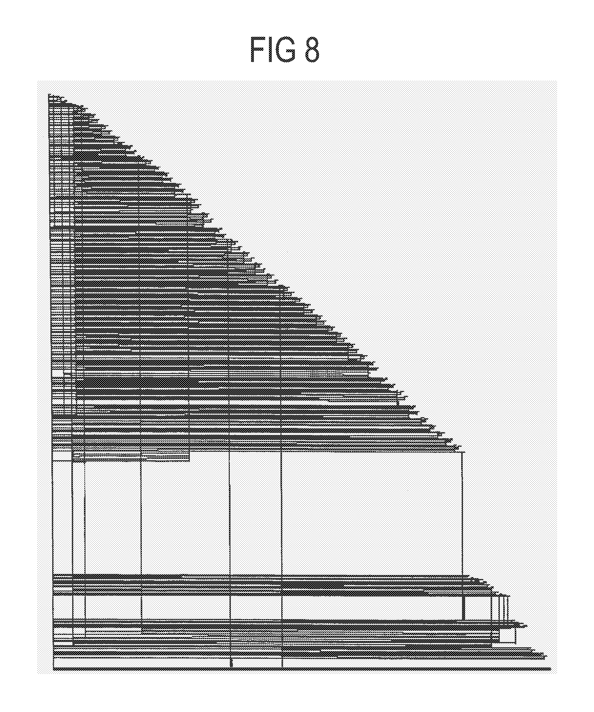

Figur 8 zeigt einen Überblick dieser Analyse. Die Grafik enthält 26656 Ereignisse und ist in einem extremen Zoom dargestellt, um eine Übersicht zu ermöglichen. In der Mitte des unteren Teils des Ablaufprotokolls ist deutlich eine Lücke sichtbar, die durch eine Ansammlung von Fehlerereignissen gekennzeichnet ist. Untersuchungen ergeben, dass die Anwendung dadurch verlangsamt worden ist, weil nicht notwendige Anfragen verarbeitet werden. Durch weiterführende Nachforschungen wird herausgefunden, dass hier eine Komponente versucht, auf ein fehlendes Gerät im synchronen Modus zuzugreifen. Die Verarbeitung in diesem Objekt pausiert, bis ein Timeout dem System ermöglicht, fortzufahren. Die gewünschte Verbesserung lässt sich in diesem speziellen Anwendungsfall zum Beispiel dadurch erzielen, dass verfügbare Geräte in einer zentralen Komponente verwaltet werden.

Allgemein sind den Ausführungsformen der Erfindung folgende Vorteile zu eigen. Die Erstellung von Analysebausteinen in Form von XSLT-Mitteln ist durch die Nutzung von XML-Technologien schnell und effizient möglich. Damit können spezifische Bausteine sehr kostengünstig erstellt und getestet werden. Die notwendigen Werkzeuge zur Generierung sind kostenlos verfügbar. Ablaufprotokolle können automatisch auf komplexe Eigenschaften des Systems hin untersucht werden. Eine Breitennutzung dieser Bausteine ist einfach zu realisieren. Durch eine Vielzahl von kleinen Analysebausteinen ist eine hohe Flexibilität bei der Auswertung von Ablaufprotokollen gegeben. Die automatische Auswertung von Ablaufprotokollen führt zu einer Produktivitätssteigerung bei der Fehleranalyse. Der Einsatz von SVG und HTML als Visualisierungsmittel ermöglicht eine webbasierte Darstellung mit den damit verbundenen Vorteilen.

## Patentansprüche

1. Verfahren zur Analyse eines Systems, bei dem ein Ablaufprotokoll erzeugt wird, das Informationen über ein Ereignis im Betrieb des Systems enthält,
**dadurch gekennzeichnet,**
**dass** das Ablaufprotokoll in XML erzeugt und/oder nach Erzeugung in XML konvertiert wird.

2. Verfahren nach Anspruch 1,
bei dem das Ablaufprotokoll eine Vielzahl von Ereignissen enthält und unter Verwendung des Ablaufprotokolls eine partielle Reihenfolge über die Ereignisse beschrieben wird.

3. Verfahren nach Anspruch 2,
bei dem die partielle Reihenfolge unter Verwendung der Happend-Before-Relation beschreiben wird.

4. Verfahren nach einem der vorhergehenden Ansprüche,
bei dem im Ablaufprotokoll eine Angabe zu Parametern des Ereignisses erzeugt wird, insbesondere zur Identifizierung des Ereignisses und/oder ob das Ereignis ein lokales Ereignis, ein Registrierungsereignis oder ein Kommunikationsereignis ist.

5. Verfahren nach einem der vorhergehenden Ansprüche,
bei dem im Ablaufprotokoll eine Angabe zu Parametern des das Ereignis auslösenden Systemteils erzeugt wird, insbesondere eine Angabe durch, die das Systemteil identifizierbar ist.

6. Verfahren nach Anspruch 5,
bei dem das Systemteil ein eine Nachricht empfangendes und/oder ein eine Nachricht sendendes Systemteil ist.

7. Verfahren nach Anspruch 6,
bei dem bei dem im Ablaufprotokoll eine Angabe zu Parametern der Nachricht erzeugt wird, insbesondere zur Identifizierung der Nachricht.

8. Verfahren nach einem der vorhergehenden Ansprüche,
bei dem das Ablaufprotokoll auf eine korrekte XML-Syntax überprüft wird.

9. Verfahren nach einem der vorhergehenden Ansprüche,
bei dem das Ablaufprotokoll durch XSLT-Mittel weiterverarbeitet wird.

10. Verfahren nach Anspruch 9,
bei dem die XSLT-Mittel eine Filterfunktion beinhalten.

11. Verfahren nach einem der Ansprüche 9 oder 10,
bei dem die XSLT-Mittel aus dem Ablaufprotokoll ein modifiziertes Ablaufprotokoll in XML erzeugen.

12. Verfahren nach einem der Ansprüche 9 bis 11,
bei dem die XSLT-Mittel eine Visualisierungsfunktion beinhalten.

13. Verfahren nach einem der Ansprüche 9 bis 12,
bei dem mehrere XSLT-Mittel verwendet werden, die in beliebiger Reihenfolge kombinierbar und ausführbar sind.

14. Anordnung, die eingerichtet ist, ein Verfahren nach einem der vorhergehenden Ansprüche auszuführen.

15. Programmprodukt für eine Datenverarbeitungsanlage, das Softwarecodeabschnitte enthält, mit denen ein Verfahren nach zumindest einem der Ansprüche 1 bis 13 auf einer Datenverarbeitungsanlage ausgeführt werden kann.
